(19) Europäisches Patentamt / European Patent Office / Office européen des brevets

(11) **EP 1 355 810 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(21) Anmeldenummer: **01989371.8**

(22) Anmeldetag: **04.12.2001**

(51) Int Cl.:
**B60T 7/22** (2006.01)

(86) Internationale Anmeldenummer:
**PCT/DE2001/004569**

(87) Internationale Veröffentlichungsnummer:
**WO 2002/058975 (01.08.2002 Gazette 2002/31)**

(54) **EINRICHTUNG ZUM BEREITSTELLEN VON SIGNALEN IN EINEM KRAFTFAHRZEUG**

DEVICE FOR PROVIDING SIGNALS IN A MOTOR VEHICLE

DISPOSITIF PERMETTANT DE FOURNIR DES SIGNAUX DANS UN VEHICULE AUTOMOBILE

(84) Benannte Vertragsstaaten:
**DE FR**

(72) Erfinder: **WINNER, Hermann**
**76467 Bietigheim (DE)**

(30) Priorität: **23.01.2001 DE 10102771**

(43) Veröffentlichungstag der Anmeldung:
**29.10.2003 Patentblatt 2003/44**

(73) Patentinhaber: **ROBERT BOSCH GMBH**
**70442 Stuttgart (DE)**

(56) Entgegenhaltungen:
**EP-A- 0 936 472     DE-A- 19 828 693**
**DE-A- 19 925 643     DE-C- 19 534 942**
**US-A- 6 084 508**

EP 1 355 810 B1

**Beschreibung**

Die vorliegende Erfindung betrifft ein Verfahren sowie eine zugehörige Einrichtung, in der eine Funktion vorgesehen ist, die Eingangsgrößen verarbeitet und funktionsbedingte Ausgangssignale erzeugt. Diese Ausgangsgrößen werden bereitgestellt, gespeichert und für Auslesevorgänge bereitgehalten. Bei Vorliegen bestimmter Umfelddaten wird ein aktueller Datensatz in einer nicht-flüchtigen Speichervorrichtung gesichert, bis diese über eine Schnittstelle ausgelesen worden sind. Durch diese Steuereinrichtung und das zugehörige Verfahren ist es möglich, zukünftig geplante Steuerungsmöglichkeiten in Fahrzeugen zu testen, ohne unerwartete und unerwünschte Funktionsreaktionen befürchten zu müssen, die in die Fahrzeugdynamik eingreifen. Die in der Steuereinrichtung vorgesehene Funktion ist vorteilhafterweise ein Algorithmus, der die Wahrscheinlichkeit einer Kollision des eigenen Fahrzeugs mit einem Zielobjekt erkennen kann und gegebenenfalls eine Vollbremsung beziehungsweise einen Lenkeingriff oder eine Kombination aus beiden einleiten kann. Die Vollbremsung stellt hierbei eine Verzögerung des Fahrzeugs, die im Bereich der für das jeweilige Fahrzeug maximal möglichen Verzögerung liegt, dar.

Stand der Technik

Die EP 0 976 627 offenbart eine Bremsensteuerung für ein Fahrzeug. Detektiert ein Radarsystem eines Fahrzeugs mit Bremsensteuerung ein Objekt vor dem Fahrzeug, so beurteilt eine Schätzeinrichtung die Wahrscheinlichkeit, dass das Fahrzeug mit dem Objekt kollidiert. Ergibt das Schätzurteil, dass eine Kollisionswahrscheinlichkeit besteht, so veranlaßt eine automatische Bremseneinheit eine automatische Bremsung um eine drohende Kollision zu vermeiden. Wird während der automatischen Bremsung eine fahrerbetätigte Bremsanforderung erkannt, so wird die Dringlichkeit der Fahrerbremsung geschätzt und die automatische Bremsensteuerung erzeugt eine Bremskraft, die dem Fahrerwunsch entspricht. Dadurch ergibt sich ein sanfter Übergang von der automatischen Bremsung zur fahrergesteuerten Bremsung.

Die DE 38 30 790 A1 beschreibt ein Verfahren und eine Vorrichtung zur automatischen Kollisionsvermeidung für automatisch führbare Fahrzeuge. Mittels dieses Verfahrens und Vorrichtung soll in Gefährdungssituationen durch Hindernisse mittels einer automatischen Kollisionsvermeidung ein kollisionsvermeidendes Beschleunigungs-, Brems- bzw. Ausweichmanöver durchgeführt werden. Dies geschieht durch ein hierarchisch aufgebautes Verfahren und durch eine zugehörige Vorrichtung, wobei sensorisch Daten des Fahrzeuges und seiner Sollbahn erfaßt und daraus ermittelte Sollsignale der Fahrzeugbahn einer zweiten hierarchischen Stufe einer Kollisionsvermeidungsvorrichtung zusammen mit den beispielsweise sensorisch erfaßten Daten einer Hindernisbahn zugeführt und darüber die Stellglieder der Fahrzeugregelung im Sinne einer Kollisionsvermeidung in einer dritten hierarchischen Stufe angesteuert werden.

Aus der DE 199 25 643 A1 ist ein System zum Regeln der Fahrtsicherheit eines Fahrzeugs bekannt, umfassend ein Hinderniserfassungsmittel, wie beispielsweise ein Laserradar zum Erfassen eines Hindernisses, das beispielsweise ein weiteres Fahrzeug sein kann, welches auf einer Bewegungsbahn des Fahrzeugs vor dem Fahrzeug liegt, und Betriebsmittel zum Betreiben eines Bremssystems des Fahrzeugs, um eine Berührung mit dem Hindernis zu vermeiden. In dem System betreiben dann, wenn sich herausstellt, daß das durch die Hinderniserfassungsmittel erfasste Hindernis verloren wurde, die Betriebsmittel das Bremssystem auf Grundlage einer geschätzten Wahrscheinlichkeit einer Berührung und/oder eines Gewissheitsgrads des Hindernisses. Mit der Anordnung kann das System geeignet einer Situation begegnen, in welcher ein einmal erfasstes Hindernis während des Bremsbetriebs verloren wurde, ohne das Fahrgefühl oder den Fahrkomfort zu verschlechtern und ohne dem Fahrzeugführer ein störendes Gefühl zu vermitteln, während dem Hindernis sicher und ohne Fehler ausgewichen wird.

Vorteile der Erfindung

Erfindungsgemäß ist vorgesehen, dass das Auslösesignal für eine Bremsung oder einen Lenkeingriff ausgegeben wird, wenn die Ungleichung

$$-(d/vr) \leq sqrt(2 \cdot deltayFlucht / |ay|) \cdot alphai \qquad (1)$$

erfüllt ist, wobei d der Abstand zum vorausfahrenden Fahrzeug, vr die Relativgeschwindigkeit des vorausfahrenden Fahrzeugs in Bezug auf das eigene Fahrzeug, die bei Annäherung der beiden Fahrzeuge negativ ist, deltayFlucht die halbe Breite des eigenen Fahrzeugs abzüglich des minimalen Abstandes des erkannten Zielobjekts zur verlängerten Fahrzeugmittelachse des eigenen Fahrzeugs zuzüglich der halben Objektausdehnung des erkannten Zielobjekts senkrecht zur verlängerten Fahrzeugmittelachse des eigenen Fahrzeugs, ay die mittlere, maximal mögliche Querbeschleunigung des Fahrzeugs bei einem Ausweichmanöver und alphai einen Sicherheitsfaktor kleiner 1 darstellt.

Die Erfindung ergibt sich aus den Merkmalen der unabhängigen Ansprüche. Vorteilhafte Weiterbildungen und Ausgestaltungen ergeben sich aus den Unteransprüchen. Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Vorteilhafter Weise betrifft die Funktion, die in der Einrichtung vorgesehen ist, künftig vorgesehene Steuerungsmöglichkeiten. Dies können vorteilhafterweise Fahrzeugfunktionen sein, die zukünftige Funktionalitäten in Kraftfahrzeugen darstellen.

Es ist weiterhin vorteilhaft, dass die nicht umsetzbaren Stellgrößen, die durch die Funktion bereitgestellt werden, das Auslösen und Durchführen einer automatischen Bremsung beziehungsweise eines automatischen Lenkeingriffs repräsentieren, wobei insbesondere als Bremsung eine Verzögerung vorgesehen ist, die im Bereich der für das jeweilige Fahrzeug maximal möglichen Verzögerung liegt beziehungsweise als Lenkeingriff eine Lenkbewegung der Räder des Kraftfahrzeugs derart vorgesehen ist, dass ein rechtzeitiges Ausweichen vor einem Hindernis ermöglicht wird. Ein derartiges Sicherheitssystem setzt eine aktive Bremseinrichtung voraus, die elektronisch und unabhängig von einer Bremspedalbetätigung angesteuert werden kann beziehungsweise setzt eine elektronisch gesteuerte Lenkung voraus, die unabhängig von einer Lenkradbewegung angesteuert werden kann.

Weiterhin ist es vorteilhaft, dass der vorgesehenen Funktion, als Teil der Steuereinrichtung, wenigstens eine der Größen

- Abstand zum vorausfahrenden Fahrzeug,
- Relativgeschwindigkeit des vorausfahrenden Fahrzeugs bezüglich des eigenen Fahrzeugs,
- Querversatz des vorausfahrenden Fahrzeugs relativ zum eigenen Fahrzeug,
- Geschwindigkeit des eigenen Fahrzeugs,
- Beschleunigung des eigenen Fahrzeugs,
- Gierrate,
- Beschleunigung des eigenen Fahrzeugs,
- Lenkradwinkel,
- relative Quergeschwindigkeit des vorausfahrenden Fahrzeugs bezüglich des eigenen Fahrzeugs,
- Breite des detektierten Zielobjekts,
- Höhe des detektierten Zielobjekts und
- Fahrbahnreibwert

als Eingangsgröße zugeführt werden kann. Es ist nicht erfindungsmäßig notwendig, dass der Funktion alle aufgeführte Größen zugeführt werden, es kann auch nur eine einzige oder mehrere der aufgeführten Größen oder zusätzliche, nicht genannte Größen der Funktion zugeführt werden.

Vorteilhafter Weise werden die Eingangsgrößen der vorgesehenen Funktion von wenigstens einer der Vorrichtungen

- Radarsensor,
- Lidarsensor,
- Videosensor,
- Stereovideosensor,
- Gierratensensor,
- Lenkwinkelsensor oder
- Raddrehzahlsensor

bereitgestellt. Es ist weiterhin im Sinne der Erfindung vorgesehen, dass einer oder mehrere dieser Sensoren an ein Steuergerät angeschlossen ist und die erfindungsgemäße Funktion Eingangsgrößen von diesem Steuergerät erhält, beispielsweise kann die Raddrehzahl von einem ABS-Steuergerät oder von einem Steuergerät einer Fahrdynamikregelung der Funktion zugeführt werden.

Des Weiteren ist es vorteilhaft, dass auf die Steuereinrichtung von außen ein Aktivierungssignal gegeben werden kann, wodurch die nicht-umsetzbaren Stellgrößen der vorgesehenen Funktion auf Stellglieder ausgegeben werden können und somit zu umsetzbaren Stellgrößen werden. Diese jederzeit durchführbare Aktivierung kann auch jederzeit wieder deaktiviert werden, indem die Steuereinrichtung von außen ein Deaktivierungssignal erhält, das die vorgesehene Funktion derart beeinflußt, dass die umsetzbaren Stellgrößen zu nicht-umsetzbaren Stellgrößen werden.

Weiterhin vorteilhaft ist es, dass die von der Funktion bereitgestellten Größen sowie die dazugehörigen Daten, die maßgeblich für die Bildung dieser Größen sind, sowie weitere Daten, die auf den Zeitpunkt und die Situation des Auslösungssignals schließen lassen, in einem nicht-flüchtigen.Speicher abgelegt werden und dort für Auslesevorgänge bereitgehalten werden.

Vorteilhafterweise handelt es sich bei der Steuereinrichtung, in der die Funktion vorgesehen ist, um eine Vorrichtung zur adaptiven Fahrgeschwindigkeitsregelung.

Die adaptive Fahrgeschwindigkeitsregelung umfaßt vorteilhafterweise eine Stop&Go-Regelung, durch die das fahrgeschwindigkeitsgeregelte Fahrzeug bis in den Stillstand abbremsen und nach erfolgtem Stillstand selbständig oder nach erfolgter Fahrerquittierung wieder anfahren kann, wie es in Warteschlangen vor Verkehrsampeln oder bei Verkehrsstockungen vorkommen kann.

Vorteilhafterweise sind die abgespeicherten Größen sowie die dazugehörigen Daten erst nach dem Auslesen überschreibbar.

Weiterhin ist es vorteilhaft, dass die nicht-flüchtige Speichervorrichtung durch eine Konstruktion vor einer unfallbedingten Zerstörung geschützt wird, so dass ein Auslesen der gespeicherten Daten auch nach einer Kollision und einer damit verbundenen Zerstörung der Einrichtung, in der die erfindungsgemäße Funktion vorgesehen ist, möglich ist.

Weiterhin ist es vorteilhaft, dass die Speicherung der bereitgestellten, nicht umsetzbaren Größen entweder als Datensatz aller Eingangsgrößen bei Auftreten des Auslösesignals erfolgt oder in einem Klassensystem, das die Auftrittshäufigkeit des Auslösesignals in Abhängigkeit verschiedener Sicherheits faktoren alphai festhält, erfolgt oder nur dann erfolgt, wenn

$$- (vr/d) \cdot sqrt(2 \cdot deltayFlucht \: / \: |ay|) \cdot alphai \qquad (2)$$

einen Wert erreicht, der größer ist als der kleinste Wert einer festen Anzahl von bisher erreichten Spitzenwerten.

Vorteilhaft ist es auch, dass durch die Auswertung von Eingangsdaten eine Fehlauslösung des Auslösesignals festgestellt werden kann und bei Vorliegen einer festgestellten Fehlauslösung ein weiterer Datensatz gespeichert wird. Eine Fehlauslösung in diesem Sinne ist ein Auslösesignal, das sich aufgrund der Umgebungssituation und des weiteren Fahrverlaufs als unbegründet herausstellt.

Es ist außerdem vorteilhaft, dass die Daten, die in dem nicht-flüchtigen Speicher abgelegt werden, verschlüsselt gespeichert werden.

Zeichnungen

Nachfolgend werden Ausführungsbeispiele der Erfindung anhand einer Zeichnung erläutert. Es zeigen

Figur 1 ein Blockschaltbild einer bevorzugten Ausführungsform einer Steuereinrichtung und

Figur 2 eine Skizze zur Beurteilung der Kollisionswahrscheinlichkeit und

Figur 3 ein Ablaufdiagramm einer möglichen Ausführungsform.

Beschreibung von Ausführungsbeispielen

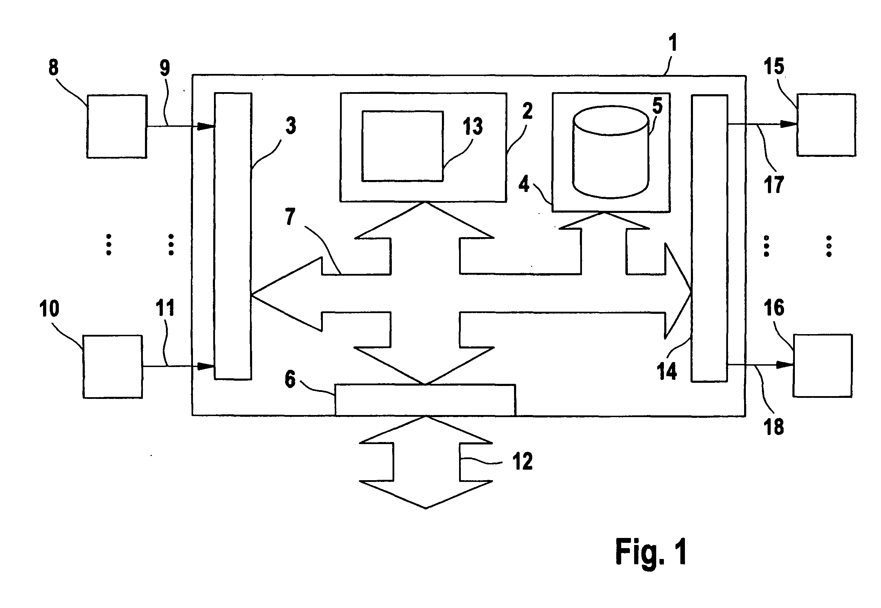

Figur 1 zeigt eine Steuereinrichtung (1), die unter anderem einen Mikroprozessor (2) enthält, in dem unter anderem die vorgesehene Funktion (13) implementiert ist. Weiterhin enthält die Steuereinrichtung (1) eine Eingangsschaltung (3), über die das Steuergerät (1) Eingangsgrößen (9, 11) von mindestens einer Meßwerterfassungseinrichtung (8, 10) erhält. Weiterhin enthält die Steuereinrichtung (1) eine Ausgangsschaltung (14), über die Ausgangsgrößen (17, 18) an ein oder mehrere Stellglieder (15, 16) weitergeleitet werden können. Die Steuereinrichtung (1) umfaßt eine Schnittstelle (6), über die das Steuergerät (1) mit einem externen Diagnosegerät oder Auswertegerät kommunizieren kann. Hierzu ist es notwendig, ein Kommunikationsmedium, vorteilhafterweise ein Schnittstellenkabel (12), das wiederum mit einer externen Diagnose- oder Auswertevorrichtung verbunden ist, mit der Schnittstelle (6) der Steuereinrichtung (1) zu verbinden. Es ist auch denkbar, dass die Schnittstelle, über die die Steuereinrichtung mit einem Diagnose- oder Auswertegerät kommuniziert, nicht wie in Figur 1 dargestellt ausgebildet ist, sondern dass zu Diagnose- und Auswertevorgängen der gleiche CAN-Bus verwendet wird, über den die Steuereinrichtung die Ein- bzw. Ausgangssignale erhält bzw. ausgibt. Des Weiteren enthält die Steuereinrichtung (1) einen nicht-flüchtigen Speicher (4), in dem bei Bedarf Datensätze (5) gespeichert werden können und für Auslesevorgänge bereitgehalten werden können. Die Steuergerätkomponenten Eingangsschaltung (3), Ausgangsschaltung (14), Kommunikationsschnittstelle (6), Mikroprozessor (2) sowie der nicht-flüchtige Speicher (4) sind untereinander mit einem internen Kommunikationssystem (7) verbunden, über das Daten und Informationen in beliebiger Richtung ausgetauscht werden können.

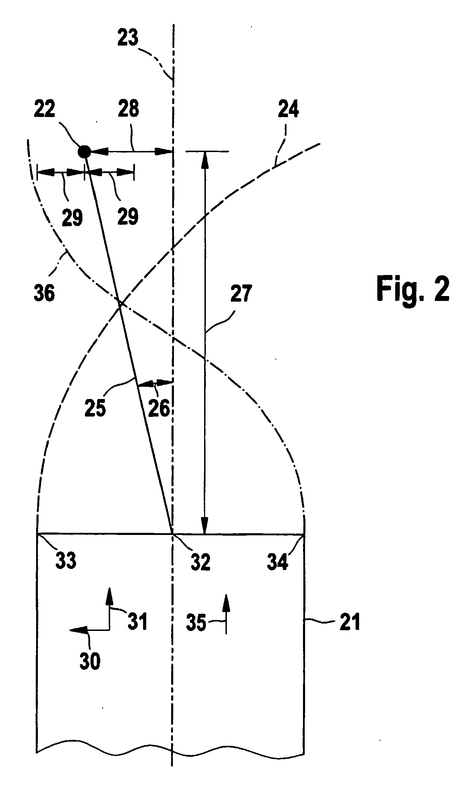

Figur 2 zeigt eine Skizze, mit der die vorgesehene Funktion (13) entscheiden kann, ob der Fahrzeugführer eine drohende Kollision noch rechtzeitig vermeiden kann. Das Inertialsystem (21) des Fahrzeugs besteht aus einer Längsrichtung (31) sowie einer Querrichtung (30). Dieses Fahrzeug (21) bewegt sich in Richtung der Längsrichtung (31) mit der Relativgeschwindigkeit vr (35) bezüglich eines erkannten Zielobjektes ZO (22). Eine Vorrichtung (8, 10) zur Bereitstellung von Eingangsgrößen (9, 11), im vorliegenden Beispiel handelt es sich hierbei um einen winkelauflösenden Radarsensor, hat in der Entfernung dstrich (25) sowie unter dem Winkel phi (26) ein Zielobjekt ZO (22) erkannt. Dieses Zielobjekt kann ein vorausfahrendes Fahrzeug oder aber auch ein stehendes Objekt auf der Fahrbahn sein. Der genannte Radarsensor ist in diesem Beispiel in der Fahrzeuglängsachse (23), also fahrzeugmittig (32) angebracht. Diese fahrzeugmittige Position (32) besitzt einen Lateralversatz y = 0. Die linke vordere Fahrzeugecke (33) besitzt vorteilhafterweise in diesem Beispiel einen Lateralversatz von y > 0. Die rechte vordere Fahrzeugecke (34) besitzt infolge dessen einen Lateralversatz von y < 0. Aus den gemessenen relativen Polarkoordinaten dstrich (25) und phi (26) kann nun der Abstand in Längsrichtung d (27) sowie der Lateralversatz ym (28) berechnet werden. Die Breite des Zielobjekts ZO, also dessen Ausdehnung des Zielobjekts senkrecht zur Fahrzeuglängsachse kann entweder durch einen festen Parameter vorgegeben werden für den Fall, dass sich die Objektbreite nicht hinreichend fein auflösen läßt oder aber, bei einer ausreichenden feinen Auflösung des Sensors, durch eine aus den Messwerten berechnete, erkannte Breite berücksichtigt werden. Diese Lateralausdehnung wird im vorliegenden Ausführungsbeispiel durch die Größe deltayobj (29), die die halbe Objektbreite beträgt, verkörpert. Für die weitere Berechnung wird für das erkannte Zielobjekt (28) die laterale Ausdehnung der Bereich zwischen den Werten ym-deltayobj und ym+deltayobj angenommen. Die gestrichelte Linie (24) stellt im vorliegenden Ausführungsbeispiel die Fluchttrajektorie der linken, vorderen Fahrzeugecke dar. Diese Fluchttrajektorie beschreibt eine mögliche Bewegung der Fahrzeugecke (33)in Bezug zum vorausfahrenden Fahrzeug, die sich während einem Ausweichmanöver zur Vermeidung einer Kollision relativ zum Zielobjekt ZO (22) ergibt. Auch in dem Fall, dass das Fahrzeug (21) das vorausfahrende Objekt (22) überholen möchte und dazu aus der Fahrbahn nach links ausschert, ergibt sich eine Fluchttrajektorie, wie es durch die strichpunktierte Linie (36) dargestellt wurde, die jedoch eine unterschiedliche Form aufweist.

Vergleicht man den minimalen Abstand, bei dem ein Ausweichen fahrdynamisch noch möglich ist mit dem minimalen Abstand bei dem eine kollisionsvermeidende Vollbremsung noch möglich ist, so stellt man fest, dass nur bei kleinen Relativgeschwindigkeiten, der Minimalabstand, bei dem ein Ausweichen möglich ist, kleiner ist als der Minimalabstand, bei dem eine kollisionsvermeidende Vollbremsung noch möglich ist. Folglich kann nur bei einer kleinen Relativgeschwindigkeit zum vorausfahrenden Fahrzeug eine Kollision durch eine Bremsung vermieden werden, die durch Ausweichen nicht mehr hätte vermieden werden können. Bei größeren Relativgeschwindigkeiten kann jedoch durch eine aktive Vollbremsung die Kollisionsschwere durch die Reduktion der Aufprallenergie verringert werden (Collision Mitigation).

Im folgenden wird ein Ansatz beschrieben, der einen Bremseneingriff nahe der maximalen, für das Fahrzeug möglichen Verzögerung vorsieht, wenn ein Ausweichen vor dem vorausfahrenden Fahrzeug nicht mehr möglich ist. Hierzu wird die neue Größe TTC (Time-To-Collision) eingeführt, die den Zeitraum bis zur berechneten Kollision beschreibt. Diese verbleibende Zeit berechnet sich zu

$$\mathtt{TTC\ =\ d/(-vr)} \qquad\qquad \mathtt{(3).}$$

Ist es möglich, innerhalb dieser Zeit mit der Querbeschleunigung ay eine Fluchttrajektorie (24) vorherzusehen, die vor dem Zielobjekt ZO (22) verläuft, so kann noch ein Lenkeingriff zur Kollisionsvermeidung durchgeführt werden. Die Querbeschleunigung ay ist die mittlere, maximal mögliche Querbeschleunigung, die das Fahrzeug mit einem Lenkmanöver erreichen kann. Ist es innerhalb dieser Zeit nicht mehr möglich, ein Ausweichmanöver mit der Querbeschleunigung ay nach Art der Fluchttrajektorie (24) durchzuführen, so wird die Auslösung einer Voll-/Notbremsung veranlaßt.

Aus dem Zeit-Beschleunigungs-Gesetz kennt man die Gleichung

$$\mathtt{t\ =\ sqrt(2\ \cdot\ |y|\ /\ |ay|)} \qquad\qquad \mathtt{(4),}$$

wobei ay die Querbeschleunigung ist und y den Querweg darstellt, der zum Ausweichen vor der Kollision zurückgelegt werden muß. Dieser Querweg, der vor der Kollision zurückgelegt sein muß, wird im Weiteren als deltayFlucht bezeichnet. Im vorliegenden Ausführungsbeispiel berechnet sich dieser Querweg deltayFlucht nach Figur 2 aus der halben Fahrzeugbreite yl abzüglich des Lateralversatzes des Zielobjektes ym (28) zuzüglich der lateralen Objektungenauigkeit deltayobj. Damit ergibt sich aus Gleichung 4

$$t = \text{sqrt}(2 \cdot (yl - |ym| + deltayobj) \, / \, |ay|) \qquad (5).$$

Da dieser Querweg vor Ablauf der bis zur Kollision verbleibenden Zeit zurückgelegt sein muß, kann man Gleichung 3 und Gleichung 5 zu folgender Ungleichung zusammenfassen:

$$-(d/vr) \leq \text{sqrt}(2 \cdot (yl - |ym| + deltayobj) \, / \, |ay|) \qquad (6)$$

Diese Ungleichung wird auch als Auslöseschwelle festgelegt. Solange diese Ungleichung nicht erfüllt ist, hat der Fahrer noch ausreichend Zeit, ein Ausweichmanöver vorzunehmen oder aber er beabsichtigt lediglich ein Überholmanöver. Ist diese Ungleichung, die die Auslöseschwelle darstellt erfüllt, so droht eine Kollision mit dem vorausfahrenden oder vorausstehenden Objekt und es wird automatisch eine Not- oder Vollbremsung eingeleitet. Die Ungleichung, die die Auslöseschwelle beschreibt, kann zusätzlich noch durch einen Sicherheitsfaktor alphai erweitert werden, wodurch sich

$$-(d/vr) \leq \text{sqrt}(2 \cdot (yl - |ym| + deltayobj) \, / \, |ay|) \cdot alphai \qquad (7)$$

ergibt. Durch die Wahl alphai < 1 läßt sich vorteilhafterweise in die Entscheidung der Ungleichung eine Reserve einplanen. Die Entscheidung, ob nur ein Lenkeingriff oder nur ein Bremseneingriff oder eine Kombination aus Lenk- und Bremseneingriff durchgeführt werden soll, kann vorteilhafterweise mittels der gleichen Bedingungsungleichung entschieden werden, indem für jede Auslösung unterschiedliche Sicherheitsfaktoren alphai verwendet werden. Hierfür ist es notwendig, dass die jeweilige Art des Eingriffs vorher aktiviert wurde.

Wird eine der mehreren möglichen Auslöseschwellen überschritten, so sieht ein erstes Speicherkonzept vor, dass die zu diesem Zeitpunkt für die Interpretation der Umgebungssituation relevanten Daten im nicht-flüchtigen Speicher (4) als Datensatz (5) abgespeichert werden. Dieses Speicherkonzept hat den Vorteil, dass nach einer erfolgten Kollision der Unfallhergang nachkonstruiert werden kann. Ein weiteres Speicherkonzept sieht vor, dass in der Funktion (13) mehrere Auslöseschwellen vorgesehen sind, die sich vorteilhafterweise durch unterschiedliche Sicherheitsfaktoren alphai unterscheiden. In diesem Fall wird im nicht-flüchtigen Speicher (4) die Auslösehäufigkeit in Abhängigkeit der verschiedenen Auslöseschwellen und damit der verschiedenen Sicherheitsfaktoren alphai abgespeichert. Dieses Speicherkonzept hat den Vorteil, dass nur sehr wenig Speicherkapazität notwendig ist. Weiterhin ist es durch dieses Konzept möglich, einen geeigneten Sicherheitsfaktor alphai empirisch zu ermitteln. Steht genügend Speicherplatz zur Verfügung, so kann in ähnlicher Weise wie im ersten Speicherkonzept für jede oder eine maximale Anzahl von Auslösungen jeweils ein Datensatz mit für die Interpretation der Umgebungssituation relevanten Daten im nicht-flüchtigen Speicher (4) abgespeichert werden.

Vorteilhafterweise bekommen die Auslösungen Priorität bei der Speicherzuordnung, die einer unempfindlichen Schwelle entsprechen, z.B. bei kleineren alphai. So wird im Fall, dass der Speicherplatz für weitere Auslösungsdatensätze nicht mehr reicht, ein vorher gespeicherter Datensatz gelöscht, wenn diese Auslösung mit einer empfindlicheren Schwelle ausgelöst wurde.

Ein drittes Speicherkonzept sieht vor, dass die beiden Ausdrücke links und rechts des Ungleichheitszeichens der Auslöseungleichung (Gl. 7) einzeln ermittelt werden und eine festgelegte Anzahl von bisher erreichten Spitzenwerten gespeichert wird. Liegt der momentan ermittelte Wert über dem kleinsten bisher gespeicherten Spitzenwert, so wird der momentane Wert neu aufgenommen und der bisher kleinste gespeicherte Spitzenwert gelöscht. Bei diesem Speicherkonzept ist es vorteilhaft, dass man mit einer sehr kleinen Speicherkapazität auskommt.

Das Auslesen des Datensatzes (5) aus dem nicht-flüchtigen Speicher (4) kann auf verschiedene Arten erfolgen. So ist es möglich, dass während der Regelinspektion der Datensatz (5) über das interne Kommunikationssystem (7) und die Schnittstelle (6) auf ein externes Gerät übertragen werden kann. Weiterhin ist es möglich, nach einem erfolgten Unfall den Datensatz (5) aus dem nicht-flüchtigen Speicher (4) auf gleiche Weise über das interne Kommunikationssystem (7) und die Schnittstelle (6) auszulesen. Weiterhin ist es möglich, das Auslesen des Datensatzes (5) aus der Steuereinrichtung (1) auf freiwilliger Basis durchzuführen. Nach erfolgtem Auslesen des Datensatzes (5) aus dem Speicher (4) ist es sowohl möglich, die bisher angefallenen Daten zu löschen oder aber die bisher angefallenen Daten weiterhin im Speicher zu belassen und im weiteren Fahrtverlauf zu vervollständigen.

Eine besonders vorteilhafte Ausführungsform sieht vor, dass die Funktion (13) durch ein Aktivierungssignal, das während eines Werkstattaufenthalts von befugtem Personal von außen über die Schnittstelle (6) auf das Steuergerät (1) gegeben wird, aktiviert wird und somit die nicht umsetzbaren Stellgrößen zusätzlich auf die Ausgangsschaltung (14) gegeben werden und somit zu umsetzbaren Stellgrößen werden. Stellt sich heraus, dass die Testfunktion (13) für den Praxiseinsatz tauglich ist, so kann auf diese Weise die Funktionalität der Steuereinrichtung (1) auf einfache und kostengünstige Weise nachträglich erweitert werden. Auf gleiche Weise ist es möglich, über ein extern ausgelöstes Deaktivierungssignal durch befugtes Personal, beispielsweise im Rahmen eines Werkstattaufenthalts, die aktivierte Testfunktion (13) zu deaktivieren, wodurch die umsetzbaren Stellgrößen wiederum zu nicht-umsetzbaren Stellgrößen werden. Dies kann für den Fall notwendig werden, dass sich die Funktion wider Erwarten als unzuverlässig herausstellt, da diese beispielsweise auf spezielle Umfeldsituationen nicht angemessen reagiert.

Weiterhin ist es möglich, eine Fehlalarmerkennung vorzusehen. Wird die Auslöseschwelle nach Gleichung 7 überschritten, so wird ein Auslösesignal, das einer Not- oder Vollbremsung entspricht, ausgelöst. Nimmt beispielsweise im weiteren Verlauf die Zeit bis zur Kollision (TTC) wieder zu oder wird ein Ausweichen wieder möglich, so kann es sein, dass die Auslösebedingung im Weiteren nicht mehr erfüllt ist. In diesem Fall kann die vorgesehene Funktion (13) selbsttätig erkennen, dass die Auslösung einer Not- oder Vollbremsung nicht angebracht ist und dieses Auslösesignal einem Fehlalarm entspricht. Bei Erkennung eines derartigen Fehlalarms können vorteilhafterweise auch Daten gespeichert werden, so dass die Ursache des Fehlalarms analysierbar ist. Diese Daten können die gleichen Größen sein, wie im Fall einer Auslösung, es ist aber auch denkbar, dass weitere Signale gespeichert werden, die der Eigendiagnose dienen, insbesondere auch Eigendiagnosesignale der angeschlossenen Umgebungssensoren.

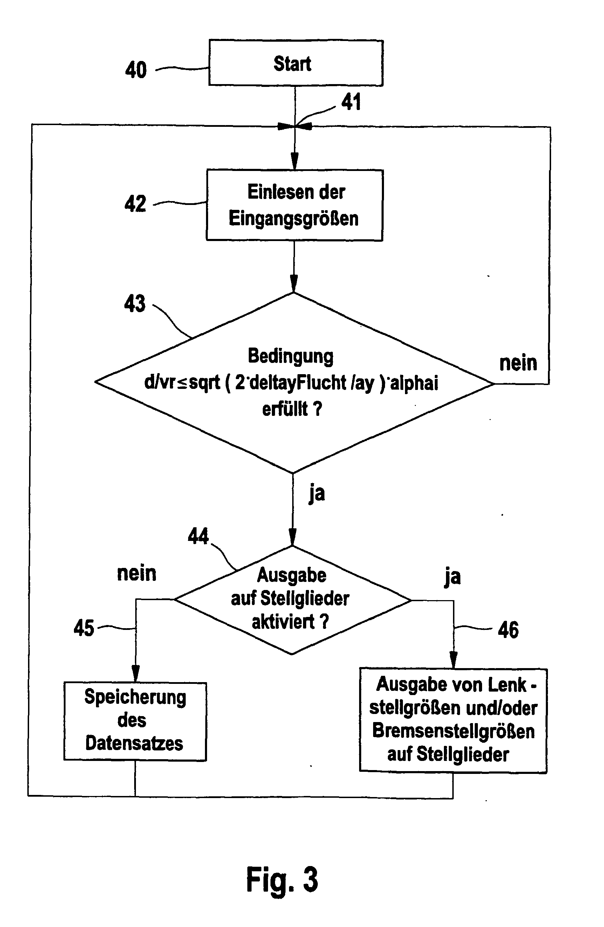

In Figur 3 ist ein Ablaufdiagramm einer möglichen Ausführungsform dargestellt. Nach erfolgtem Start (40) des Algorithmus, in dessen Umfang ein Selbsttest sowie eine Initialisierung vorgesehen ist, erfolgt ein erstmaliges Einlesen von Eingangsgrößen (42). Diese Eingangsgrößen werden im folgenden Schritt (43) in eine Bedingung, im vorliegenden Beispiel handelt es sich dabei um eine Ungleichung, eingesetzt. Ist die dargestellte Bedingung nicht erfüllt, so ist das momentane Kollisionsrisiko sehr klein und kein automatischer Eingriff in Bremse bzw. Lenkung notwendig. Diese Bedingung kann je nach Art der zukünftig vorgesehenen Fahrzeugfunktion unterschiedlich sein. So sind auch Bedingungen, die aus mehreren Einzelbedingungen bestehen, möglich. Ist die in Figur 3 genannte Bedingung nicht erfüllt so verzweigt der Algorithmus nach "nein" und es werden in einem neuen Durchlauf des Blocks (42) neue Eingangsgrößen eingelesen. Dies läßt auf eine zu geringe, momentane Kollisionswahrscheinlichkeit schließen, so dass kein Brems- bzw. Lenkeingriff vorzunehmen ist. Sollte die Bedingung im Block (43) erfüllt sein, so muß mit einem hohen Kollisionsrisiko gerechnet werden. Durch ein Verzweigen aus (43) nach "ja" wird vor einem Auslösen eines Brems- bzw. Lenkeingriffs in Block (44) abgefragt, ob eine Ausgabe auf Stellglieder aktiviert wurde. Ergibt diese Abfrage in Block (44), dass keine Ausgabe auf Stellglieder erfolgen soll, so werden die aktuellen Werte der für die Rekonstruktion der Umgebungssituation relevanten Signale im Block (45) gespeichert und für künftige Auslesevorgänge in der Speichervorrichtung bereitgehalten. Ergibt die Abfrage in Block (44), dass eine Ausgabe von Stellgrößen auf Stellglieder aktiviert wurde, so wird in Block (46) ein Brems- bzw. Lenkeingriff ausgelöst und in Abhängigkeit der erkannten momentanen Fahrsituation durchgeführt. Es ist auch im Sinne dieser Erfindung, dass bei Auslösung eines Brems- oder Lenkeingriffs ein aktueller Datensatz abgespeichert wird.

Nach erfolgter Speicherung der aktuellen Daten in Block (45) bzw. nach erfolgter Durchführung eines Brems- bzw. Lenkeingriffs in Block (46) wird der Ablauf des Algorithmus nach Punkt (41) weitergeleitet und von dort aus zu einem erneuten Einlesevorgang in Block (42) fortgesetzt.

Eine weiteres Ausführungsbeispiel sieht vor, dass die Daten, die im nicht-flüchtigen Speicher der Steuereinrichtung gespeichert werden, zusätzlich in einem nicht-flüchtigen Speicher eines weiteren Steuergerätes, das mit der ersten Steuereinrichtung durch ein Datenkommunikationsmedium verbunden ist, gespeichert werden. Vorteilhafterweise wird hierdurch ein Datenverlust infolge einer unfallbedingten Zerstörung des ersten Steuergerätes vermieden. Das weitere Steuergerät kann ein Steuergerät zur Steuerung einer beliebigen Fahrzeugfunktion wie beispielsweise ABS, Fahrdynamikregelung, Motorsteuerung, Bordcomputer oder ähnlichem sein.

**Patentansprüche**

1.    Verfahren zum Bereitstellen von Signalen in einem Kraftfahrzeug, abhängig von Eingangssignalen, insbesondere bezüglich Abstand und Relativgeschwindigkeit zu einem in Fahrtrichtung sich befindenden Objekt, wobei mittels einer vorgesehenen Funktion (13) in der Steuereinrichtung (1) für das jeweilige Fahrzeug nicht umsetzbare Stellgrößen bereitstellt werden, gespeichert werden und für Auslesevorgänge bereitgehalten werden, **dadurch gekennzeichnet, dass** ein Signal zur Auslösung für eine Bremsung , die im Bereich der für das jeweilige Fahrzeug maximal möglichen Verzögerung liegt beziehungsweise eines Lenkeingriffs, der eine Lenkbewegung der Räder des Kraftfahrzeugs zum rechtzeitigen Ausweichen vor einem Hindernis vorsieht, ausgegeben wird, wenn die Ungleichung

$$-(d/vr) \leq sqrt(2 \cdot deltayFlucht/|ay|) \cdot alphai$$

erfüllt ist, wobei

d der Abstand zum vorausfahrenden Fahrzeug,

vr die Relativgeschwindigkeit des vorausfahrenden Fahrzeugs in Bezug auf das eigene Fahrzeug,

deltayFlucht die halbe Breite des eigenen Fahrzeugs (33) abzüglich des Betrags des Lateralversatzes des erkannten Zielobjekts zur verlängerten Fahrzeugmittelachse des eigenen Fahrzeugs (28) zuzüglich der halben Objektausdehneung des erkannten Zielobjekts senkrecht zur verlängerten Fahrzeugmittelachse des eigenen Fahrzeugs (29),

ay die mittlere, maximal mögliche Querbeschleunigung des Fahrzeugs bei einem Ausweichmanöver und

alphai einen Sicherheitsfaktor kleiner oder gleich Eins

darstellt.

2. Verfahren nach Anspruch 1, **dadurch gekennzeichnet, dass** das Verfahren eine künftig vorgesehene Steuerungsmöglichkeit ist.

3. Verfahren nach Anspruch 1, **dadurch gekennzeichnet, dass** die nicht umsetzbaren Stellgrößen, die durch die Funktion (13) bereitgestellt werden, das Auslösen und Durchführen einer automatischen Bremsung beziehungsweise - eines automatischen Lenkeingriffs repräsentieren, wobei insbesondere als Bremsung eine Verzögerung vorgesehen ist, die im Bereich der für das jeweilige Fahrzeug maximal möglichen Verzögerung liegt beziehungsweise als Lenkeingriff eine Lenkbewegung der Räder des Kraftfahrzeugs derart vorgesehen ist, dass ein rechtzeitiges Ausweichen vor einem Hindernis ermöglicht wird.

4. Verfahren nach Anspruch 1, **dadurch gekennzeichnet, dass** die Speicherung der bereitgestellten, nicht umsetzbaren Größen

    - als Datensatz aller Eingangsgrößen, bei Auftreten des Auslösesignals, erfolgt oder

    - in einem Klassensystem, das die Auftrittshäufigkeit des Auslösesignals in Abhängigkeit verschiedener Sicherheitsfaktoren alphai festhält, erfolgt oder

    - nur dann erfolgt, wenn $[-(vr/d) \cdot (2 \cdot deltayFlucht/|ay|)^{1/2} \cdot alphai]$ einen Wert erreicht, der größer ist als der kleinste Wert einer festen Anzahl von bisher erreichten Spitzenwerten.

5. Verfahren nach Anspruch 1, **dadurch gekennzeichnet, dass** durch Auswertung von Eingangsdaten (9,11) eine Fehlauslösung des Auslösesignals festgestellt werden kann und bei Vorliegen einer festgestellten Fehlauslösung ein weiterer Datensatz gespeichert wird.

6. Einrichtung zum Bereitstellen von Signalen in einem Kraftfahrzeug, abhängig von Eingangssignalen, insbesondere bezüglich Abstand und Relativgeschwindigkeit zu einem in Fahrtrichtung sich befindenden Objekt, wobei in der Einrichtung eine Funktion (13) vorgesehen ist, die für das jeweilige Fahrzeug nicht umsetzbare Stellgrößen bereitstellt, speichert und für Auslesevorgänge bereithält, **dadurch gekennzeichnet, dass** in der Einrichtung das Verfahren nach einem der Ansprüche 1 bis 5 abläuft.

7. Einrichtung nach Anspruch 6, **dadurch gekennzeichnet, dass** die vorgesehene Funktion (13), die in der Einrichtung (1) vorgesehen ist, künftig vorgesehene Steuerungsmöglichkeiten betrifft.

8. Einrichtung nach Anspruch 6, **dadurch gekennzeichnet, dass** die nicht umsetzbaren Stellgrößen, die durch die Funktion (13) bereitgestellt werden, das Auslösen und Durchführen einer automatischen Bremsung beziehungsweise eines automatischen Lenkeingriffs repräsentieren, wobei insbesondere als Bremsung eine Verzögerung vorgesehen ist, die im Bereich der für das jeweilige Fahrzeug maximal möglichen Verzögerung liegt beziehungsweise als Lenkeingriff eine Lenkbewegung der Räder des Kraftfahrzeugs derart vorgesehen ist, dass ein rechtzeitiges Ausweichen vor einem Hindernis ermöglicht wird.

9. Einrichtung nach Anspruch 6 oder 7, **dadurch gekennzeichnet, dass** die Funktion (13) als Eingangsgrößen (9,11) wenigstens eine der Größen

    - Abstand zum vorausfahrenden Fahrzeug,

    - Relativgeschwindigkeit des vorausfahrenden Fahrzeugs bezüglich des eigenen Fahrzeugs,

    - Querversatz des vorausfahrenden Fahrzeugs relativ zum eigenen Fahrzeug,

    - Geschwindigkeit des eigenen Fahrzeugs,

    - Beschleunigung des eigenen Fahrzeugs,

    - Gierrate,

- Querbeschleunigung des eigenen Fahrzeugs,
- Lenkradwinkel,
- relative Quergeschwindigkeit des vorausfahrenden Fahrzeugs bezüglich des eigenen Fahrzeugs,
- Höhe des detektierten Objektes,
- Objektausdehnung in Querrichtung,
- Fahrbahnreibwert

verarbeitet, jedoch nicht zwangsläufig alle.

**10.** Einrichtung nach Anspruch 6 oder 7, **dadurch gekennzeichnet, dass** die Eingangsgrößen (9,11) von wenigstens einer der Vorrichtungen

- Radarsensor,
- Lidarsensor,
- Videosensor,
- Multivideosensor,
- Gierratensensor,
- Lenkwinkelsensor oder
- Raddrehzahlsensor

(8,10) bereitgestellt werden, jedoch nicht zwangsläufig von allen.

**11.** Einrichtung nach Anspruch 6 oder 7, **dadurch gekennzeichnet, dass** die nicht umsetzbaren Stellgrößen der vorgesehenen Funktion (13) durch ein Aktivierungssignal auf Stellglieder (15,16) ausgegeben werden können und somit zu umsetzbaren Stellgrößen werden.

**12.** Einrichtung nach Anspruch 6 oder 7, **dadurch gekennzeichnet, dass** die bereitgestellten nicht umsetzbaren Stellgrößen (5) in einer nicht-flüchtigen Speichervorrichtung (4) abgelegt werden und diese abgespeicherten, nicht umsetzbaren Stellgrößen (5) erst nach dem Auslesen überschreibbar sind.

**13.** Einrichtung nach Anspruch 6 oder 7, **dadurch gekennzeichnet, dass** es sich bei der Einrichtung (1) um eine Vorrichtung zur adaptiven Fahrgeschwindigkeitsreglung handelt.

**Claims**

**1.** Method for providing signals in a motor vehicle, as a function of input signals, in particular relating to the distance and relative velocity with respect to an object which is located in the direction of travel, wherein manipulated variables which cannot be implemented for the respective vehicle are provided by means of a function (13) provided in the control device (1), are stored and are kept ready for reading-out processes, **characterized in that** a triggering signal is output for a braking operation which lies in the region of the maximum possible deceleration for the respective vehicle, or for a steering intervention which provides a steering movement of the wheels of the motor vehicle for a prompt avoidance manoeuvre before an obstacle, if the inequation

$$-(d/vr) \leq \texttt{sqrt}(2 \cdot \texttt{deltayFlucht}/|ay|) \cdot \texttt{alphai}$$

is met, where
d is the distance from the vehicle travelling ahead,
vr is the relative velocity of the vehicle travelling ahead with respect to the driver's own vehicle, deltayFlucht is half the width of the driver's own vehicle (33) minus the absolute value of the lateral offset of the detected target object with respect to the extended vehicle central axis of the driver's own vehicle (28) plus half the extent of the detected target object perpendicularly with respect to the extended vehicle central axis of the driver's own vehicle (29), ay is the central maximum possible lateral acceleration of the vehicle during an avoidance manoeuvre, and alphai is a safety factor less than or equal to one.

**2.** Method according to Claim 1, **characterized in that** the method is a control possibility which is provided for the future.

3. Method according to Claim 1, **characterized in that** the manipulated variables which cannot be implemented and which are provided by the function (13) represent the triggering and execution of an automatic braking operation or of an automatic steering intervention, wherein, in particular, a deceleration which lies in the region of the maximum possible deceleration for the respective vehicle is provided as a braking operation, or a steering movement of the wheels of the motor vehicle is provided as a steering intervention, in such a way that a prompt avoidance manoeuvre before an obstacle is made possible.

4. Method according to Claim 1, **characterized in that** the storage of the non-implementable variables which are provided

    - takes place as a data record of all the input variables, when the triggering signal occurs,
    or
    - takes place in a class system which records the frequency of occurrence of the triggering signal as a function of various safety factors alphai, or
    - takes place only if $[-(vr/d)\cdot(2\cdot deltayFlucht/|ay|)^{1/2}\cdot alphai]$ reaches a value which is greater than the smallest value of a fixed number of previously reached peak values.

5. Method according to Claim 1, **characterized in that** by evaluating input data (9, 11) it is possible to detect, incorrect triggering of the triggering signal, and when detected incorrect triggering occurs a further data record is stored.

6. Device for providing signals in a motor vehicle, as a function of input signals, in particular relating to the distance and relative velocity with respect to an object which is located in the direction of travel, wherein a function (13), which provides manipulated variables which cannot be implemented for the respective vehicle, stores them and keeps them ready for reading-out processes, is provided in the device, **characterized in that** the method according to one of Claims 1 to 5 is executed in the device.

7. Device according to Claim 6, **characterized in that** the provided function (13), which is provided in the device (1), relates to control possibilities which are provided for the future.

8. Device according to Claim 6, **characterized in that** the manipulated variables which cannot be implemented and which are provided by the function (13) represent the triggering and execution of an automatic braking operation or of an automatic steering intervention, wherein, in particular, a deceleration which lies in the region of the maximum possible deceleration for the respective vehicle is provided as a braking operation, or a steering movement of the wheels of the motor vehicle is provided as a steering intervention, in such a way that a prompt avoidance manoeuvre before an obstacle is made possible.

9. Device according to Claim 6 or 7, **characterized in that** the function (13) processes, as input variables (9, 11), at least one of the variables

    - distance from the vehicle travelling ahead,
    - relative velocity of the vehicle travelling ahead with respect to the driver's own vehicle,
    - lateral offset of the vehicle travelling ahead relative to the driver's own vehicle,
    - velocity of the driver's own vehicle,
    - acceleration of the driver's own vehicle,
    - yaw rate,
    - lateral acceleration of the driver's own vehicle,
    - steering wheel angle,
    - relative lateral velocity of the vehicle travelling ahead with respect to the driver's own vehicle,
    - height of the detected object,
    - extent of the object in the lateral direction,
    - coefficient of friction of the underlying surface,
    but not necessarily all of said variables.

10. Device according to Claim 6 or 7, **characterized in that** the input variables (9, 11) are provided by at least one of the apparatuses (8, 10)

    - radar sensor,
    - lidar sensor,

- video sensor,
- multivideo sensor,
- yaw rate sensor,
- steering angle sensor or
- wheel rotation speed sensor,
but not necessarily by all of said apparatuses.

**11.** Device according to Claim 6 or 7, **characterized in that** the manipulated variables of the provided function (13) which cannot be implemented can be output by an activation signal to actuator elements (15, 16) and can therefore become manipulated variables which can be implemented.

**12.** Device according to Claim 6 or 7, **characterized in that** the manipulated variables (5) which are provided and which cannot be implemented are stored in a nonvolatile storage device (4), and these stored manipulated variables (5) which cannot be implemented cannot be overwritten until after they have been read out.

**13.** Device according to Claim 6 or 7, **characterized in that** the device (1) is an adaptive cruise control apparatus.


**Revendications**

**1.** Procédé de formation de signaux dans un véhicule automobile en fonction de signaux d'entrée, en particulier qui concernent la distance et la vitesse relatives par rapport à un objet situé dans la direction de déplacement, des grandeurs de réglage non convertibles étant formées au moyen d'une fonction (13) prévue dans le dispositif de commande (1) pour le véhicule concerné, étant conservées en mémoire et maintenues à disposition pour des opérations de lecture,
**caractérisé en ce que**
un signal de déclenchement d'un freinage situé dans la plage du ralentissement maximal possible pour le véhicule concerné ou d'une intervention sur la direction qui prévoit un déplacement de braquage des roues du véhicule automobile pour éviter en temps utile un obstacle étant délivré lorsque l'inéquation

$$-(d/vr) \leq sqrt(2deltayFlucht/|ay|)alphai$$

dans laquelle
d représente la distance par rapport au véhicule se déplaçant en avant,
vr représente la vitesse relative du véhicule se déplaçant en avant par rapport au véhicule propre,
deltayFlucht représente la moitié de la largeur du véhicule propre (33) après déduction du niveau de décalage latéral de l'objet cible détecté par rapport à l'axe central prolongé du véhicule propre (28), additionné de la moitié de l'extension de l'objet cible détecté, perpendiculairement à l'axe central prolongé du véhicule propre (29),
ay représente l'accélération transversale moyenne maximale possible du véhicule lors d'une manoeuvre d'évitement et
alphai représente un facteur de sécurité inférieur ou égal à un
est satisfaite.

**2.** Procédé selon la revendication 1, **caractérisé en ce que** le procédé est une possibilité de commande prévue pour le futur.

**3.** Procédé selon la revendication 1, **caractérisé en ce que** les grandeurs de réglage non convertibles formées par la fonction (13) représentent le déclenchement et l'exécution d'un freinage automatique ou d'une intervention automatique sur la direction, et sont en particulier dans le cas d'un freinage un ralentissement situé dans la plage du ralentissement maximal possible pour le véhicule concerné et en cas d'intervention sur la direction, un déplacement de braquage des roues du véhicule automobile prévu de manière à permettre un évitement en temps utile d'un obstacle.

**4.** Procédé selon la revendication 1, **caractérisé en ce que** la conservation en mémoire des grandeurs non convertibles formées s'effectue comme jeu de données de toutes les grandeurs d'entrée lorsqu'un signal de déclenchement survient, dans un système de classement qui conserve la fréquence d'apparition du signal de déclenchement en fonction de différents facteurs de sécurité alphai ou uniquement lorsque $[-(vr/d)(2deltayFlucht/|ay|)^{1/2}alphai]$ atteint une valeur supérieure à la plus petite valeur d'un nombre fixe de valeurs de pointe atteintes jusque là.

5. Procédé selon la revendication 1, **caractérisé en ce qu'**un déclenchement erroné du signal de déclenchement peut être constaté par évaluation de données d'entrée (9, 11) et **en ce qu'**un autre jeu de données est mis en mémoire au cas où un déclenchement erroné est constaté.

6. Dispositif de formation de signaux dans un véhicule automobile en fonction de signaux d'entrée, en particulier concernant la distance et la vitesse relatives par rapport à un objet situé dans la direction d'avancement, une fonction (13) qui forme pour le véhicule concerné des grandeurs de réglage non convertibles et maintient disponibles des opérations de lecture étant prévue dans le dispositif,
**caractérisé en ce que**
le procédé selon l'une des revendications 1 à 5 se déroule dans le dispositif.

7. Dispositif selon la revendication 6, **caractérisé en ce que** la fonction (13) prévue dans le dispositif (1) concerne des possibilités de commande prévues pour le futur.

8. Dispositif selon la revendication 6, **caractérisé en ce que** les grandeurs de réglage non convertibles formées par la fonction (13) le déclenchement et l'exécution d'un freinage automatique ou d'une intervention automatique sur la direction, et sont en particulier dans le cas d'un freinage un ralentissement situé dans la plage du ralentissement maximal possible pour le véhicule concerné et en cas d'intervention sur la direction, un déplacement de braquage des roues du véhicule automobile prévu de manière à permettre un évitement en temps utile d'un obstacle.

9. Dispositif selon les revendications 6 ou 7, **caractérisé en ce que** la fonction (13) traite comme grandeurs d'entrée (9, 11) au moins l'une des grandeurs suivantes :

   - distance par rapport au véhicule se déplaçant en avant,
   - vitesse relative du véhicule se déplaçant en avant par rapport au véhicule propre,
   - décalage transversal du véhicule se déplaçant en avant par rapport au véhicule propre,
   - vitesse du véhicule propre,
   - accélération du véhicule propre,
   - vitesse de lacet,
   - accélération transversale du véhicule propre,
   - angle des roues directrices,
   - vitesse transversale relative du véhicule se déplaçant en avant par rapport au véhicule propre,
   - hauteur de l'objet détecté,
   - extension de l'objet dans la direction transversale,
   - coefficient de frottement de la chaussée,
   mais pas obligatoirement toutes ces grandeurs.

10. Dispositif selon les revendications 6 ou 7, **caractérisé en ce que** les grandeurs d'entrée (9, 11), mais pas obligatoirement toutes ces grandeurs, sont formées par l'un des dispositifs suivants :

   - détecteur radar,
   - détecteur lidar,
   - détecteur vidéo,
   - détecteur multividéo,
   - détecteur de taux de lacet,
   - détecteur d'angle de direction ou
   - détecteur de vitesse de rotation des roues (8, 10).

11. Dispositif selon les revendications 6 ou 7, **caractérisé en ce que** les grandeurs de réglage non convertibles de la fonction (13) prévue peuvent être délivrées à des organes de réglage (15, 16) par un signal d'activation et être ainsi converties en grandeurs de réglage convertibles.

12. Dispositif selon les revendications 6 ou 7, **caractérisé en ce que** les grandeurs de réglage (5) non convertibles formées sont placées dans un dispositif (4) de mémoire non volatile et ces grandeurs de réglage (5) non convertibles conservées en mémoire ne peuvent être remplacées qu'après avoir été lues.

13. Dispositif selon les revendications 6 ou 7, **caractérisé en ce que** le dispositif (1) est un dispositif de régulation adaptative de la vitesse de déplacement.

EP 1 355 810 B1

Fig. 1

14

**Fig. 2**

**Fig. 3**

**IN DER BESCHREIBUNG AUFGEFÜHRTE DOKUMENTE**

**In der Beschreibung aufgeführte Patentdokumente**

- EP 0976627 A
- DE 3830790 A1
- DE 19925643 A1